# EUROPÄISCHE PATENTSCHRIFT

(11) **EP 2 240 295 B1**
(45) Veröffentlichungstag und Bekanntmachung des Hinweises auf die Patenterteilung: **02.11.2011**
(21) Anmeldenummer: 09709185.4
(22) Anmeldetag: 16.01.2009
(51) Int. Cl.: B23Q 17/00, B23Q 1/00

(54) **KUPPELEINRICHTUNG ZUM AUTOMATISIERTEN ANKUPPELN EINES WERKZEUGHALTERS AN EINEN WERKZEUGAUFNEHMER AUF EINER HANDHABUNGSEINRICHTUNG**
COUPLING MECHANISM FOR AUTOMATICALLY COUPLING A TOOL HOLDER TO A TOOL FIXTURE ON A MANIPULATION DEVICE
DISPOSITIF DE COUPLAGE AUTOMATISÉ D'UN PORTE-OUTIL AVEC UN SUPPORT DE FIXATION D'OUTIL

(30) Priorität: 06.02.2008 AT 1872008
(43) Veröffentlichungstag der Anmeldung: 20.10.2010
(73) Patentinhaber: Siemens VAI Metals Technologies GmbH, 4031 Linz (AT)
(72) Erfinder: EBNER, Helmut, A-4331 Naarn i.M. (AT); PENN, Johann, A-4203 Altenberg (AT); POEPPL, Johann, A-4202 Kirchschlag (AT); SCHORN, Christian, A-4040 Linz (AT); SHAN, Guoxin, A-4020 Linz (AT); TANZER, Suzanne, A-4060 Leonding (AT); THOENE, Heinrich, A-4020 Linz (AT); WIMMER, Franz, A-4752 Riedau (AT)
(74) Vertreter: Maier, Daniel Oliver
(86) Internationale Anmeldenummer: PCT/EP2009/000266
(87) Internationale Veröffentlichungsnummer: WO 2009/097956

(56) Entgegenhaltungen:
- EP-A- 0 791 427
- EP-A- 1 277 542
- DE-A1- 19 959 778
- DE-C1- 10 154 876
- DE-U- 7 421 499
- JP-A- 52 114 183
- US-A- 4 525 918

## Beschreibung

Kuppeleinrichtung zum automatisierten Ankuppeln eines Werkzeughalters an einen Werkzeugaufnehmer auf einer Handhabungseinrichtung.

### Technisches Gebiet

Die Erfindung betrifft eine Kuppeleinrichtung zum automatisierten Ankuppeln eines ein Werkzeug tragenden Werkzeughalters, der einen Kegelschaft und einen Spannkopf umfasst, an einem Werkzeugaufnehmer auf einer Handhabungseinrichtung, wie vorzugsweise einem Roboter. Der Werkzeugaufnehmer ist mit einer Kegelhülse und einem Verriegelungsmechanismus ausgestattet, der eine mit dem Spannkopf zusammenwirkende Greifeinrichtung und eine in axialer Richtung wirkende Spanneinrichtung umfasst. Der Kuppeleinrichtung ist ein Sensor zur Lagebestimmung zugeordnet. Weiters betrifft die Erfindung ein Verfahren zum automatisierten Ankoppeln eines ein Werkzeug tragenden Werkzeughalters an einem Werkzeugaufnehmer auf einer Handhabungseinrichtung.

Unter einem ein Werkzeug tragenden Werkzeughalter ist in einer baulich sehr einfachen Ausführungsform ein konusförmiger Kegelschaft zu verstehen, der mit einem Werkzeug zur Durchführung bestimmter Arbeiten, vorzugsweise an einer metallurgischen Einrichtung, beispielsweise einer Stranggießanlage oder einem Schmelzenbehälter, eine fertigungstechnische Einheit bildet. Für spezielle Anwendung einer Handhabungseinrichtung im Bereich einer Stranggießanlage umfasst der Werkzeughalter gemäß einer möglichen Ausführungsform einen Kegelschaft und einen Spannkopf, an dem ein Werkzeug, beispielsweise eine Messlanze zur Bestimmung der Schmelzentemperatur in einem Verteilergefäß oder in der Stranggießkokille oder eine Freiblaselanze zum Öffnen der Auslassöffnung eines Schmelzengefäßes lagedefiniert eingespannt auf einer Ablagefläche im Wirkungsbereich der Handhabungseinrichtung bereitgelegt ist.

### Stand der Technik

Eine Einrichtung der gattungsbildenden Art ist bereits aus der DE-19959778 bekannt. In der DE 32 14 025 A1 ist ein die Kegelhülse tragender Teil der Kuppeleinrichtung auf dem Arbeitsgerät. z.B. einem Fertigungsroboter, fix befestigt. Ein mit einem Kegelschaft ausgestattetes Werkzeug oder beliebiges Arbeitsgerät ist in einem Werkzeugmagazin abgelegt und der Roboter kann durch entsprechende Steuerung unterschiedliche Arbeitsgeräte aus dem Magazin aufnehmen und diese wieder dort ablegen. Die Verriegelung des Arbeitsgerätes in der Kegelhülse erfolgt hierbei durch einen hydraulisch oder pneumatisch zu betätigenden Verriegelungsbolzen, der in der Verriegelungsposition in eine Ausnehmung des Kegelschaftes einrastet. Nähere Angaben zum zielgenauen Anfahren der Verriegelungsposition durch den Roboter sind diesem Dokument nicht zu entnehmen.

Aus der DE 33 36 111 C1, der DE 20 2005 013 995 U1, der DE 101 41 641 A1 und der DE 297 23 331 U1 sind kraftbetätigte Spann- und Lösevorrichtungen für Schaftwerkzeuge, wie Steilkegelwerkzeuge bekannt, bei denen ein Werkzeug mit einem Kegelschaft und einem Spannkopf in eine Kegelhülse eines Werkzeugträgers oder einer Arbeitsspindel eingesetzt und mit einer axial beweglichen Zugstange, der Spannelemente zugeordnet sind, in die Kegelhülse gezogen und in ihr gehalten werden.

Werkzeuge, die mit diesen beschriebenen Kuppeleinrichtungen ausgestattet sind, werden überwiegend bei Werkzeugmaschinen eingesetzt und erfordern zumeist eine besondere Abstimmung mit dem Greifer eines Werkzeugwechslers, der den Transport des Werkzeuges zwischen einem Magazin und der z.B. Arbeitsspindel der Werkzeugmaschine wahrnimmt.

Der Einsatz und die Anwendung von Positionsmesssensoren bei Kuppeleinrichtungen und bei einem Verfahren zum überwachten Ankuppeln eines Werkzeuges an einen Werkzeugaufnehmer sind aus mehreren Dokumenten bereits bekannt.

Die Anwendung eines Positionsmesssensors beim üblichen Einsetzen eines Werkzeuges in einen Werkzeughalter und seine Verwendung zum Überwachen dieses Einsetzvorganges ist in der WO 2004/037486 A1 beschrieben. Diese Lösung mit einem von den zu kuppelnden Teilen unabhängig fest positionierten Sensor ist jedoch für die Überwachung eines Ankuppelvorganges an einem Werkzeugaufnehmer einer Handhabungseinrichtung, wie vorzugsweise einem Roboter, wegen der vorherrschenden dreidimensionalen Bewegungsabläufe nicht geeignet.

Sensoren zur Überprüfung der Position eines Werkzeuges im eingenommenen gekuppelten Zustand in Hinblick auf den Rundlauf des Werkzeuges oder einer ordnungsgemäßen Verriegelung des Werkzeuges in einem Werkzeugfutter sind aus der DE 44 15 306 A1 und der EP 1 726 401 A1 bereits bekannt. Diese Ausführungsformen einer Einrichtung zur Überprüfung einer Montageposition sind ebenfalls nicht geeignet, einen Kuppelvorgang zu steuern.

### Darstellung der Erfindung

Aufgabe der vorliegenden Erfindung ist es, die Nachteile des bekannten Standes der Technik zu vermeiden und eine Vorrichtung und ein Verfahren der eingangs beschriebenen Art vorzuschlagen, bei der eine automatisierte Aufnahme unterschiedlichster Werkzeuge und Arbeitsgeräte positionskontrolliert möglich ist.

Die der Erfindung zugrunde liegende Aufgabe wird mit einer Einrichtung nach Anspruch 1 gelöst.

Um den Kegelschaft des Werkzeughalters in seinem Einsatzbereich vor äußeren Einflüssen, wie insbesondere vor Verschmutzung und intensiver thermischen Belastung durch beispielsweise flüssiges Metall in metallurgischen Gefäßen, zu schützen ohne die Aufnahme des ein Werkzeug tragenden Werkzeughalters zu behindern, ist vorgesehen, dass der Kegelschaft des Werkzeughalters von einer den Kegelschaft entlang seiner Längserstreckung mit radialem Abstand umhüllenden Schutzhaube umgeben ist.

Günstige Bedingungen für den Aufnahmevorgang eines Werkzeugs durch eine Handhabungseinrichtung ist gegeben, wenn die Referenzfläche am Werkzeughalter von der äußeren Kegelmantelfläche des Kegelschaftes gebildet ist.

Besonders günstige Bedingungen für den Aufnahmevorgang eines Werkzeuges sind gegeben, wenn die Referenzfläche am Werkzeughalter von der Innenmantelfläche einer den Kegelschaft mit radialem Abstand umhüllenden Schutzhaube gebildet ist.

Zur eindeutigen Bestimmung der räumlichen Lage des Werkzeughalters relativ zur räumlichen Lage des Werkzeugaufnehmers ist es notwendig, dass an der inneren Kegelmantelfläche oder der Außenwand der Kegelhülse mehrere Sensoren angeordnet sind, und dass diesen Sensoren eine Auswerteeinrichtung für die ermittelten Messdaten zugeordnet und die Auswerteeinrichtung mit Stellmittel der Handhabungseinrichtung signaltechnisch verbunden ist.

Vorzugsweise sind an der inneren Kegelmantelfläche oder an der Außenwand der Kegelhülse mindestens zwei, vorzugsweise drei, Sensoren in einer normal auf die Längsachse des Werkzeugaufnehmers ausgerichteten ersten Ebene angeordnet und in einer weiteren mit axialem Abstand zur ersten Ebene und normal auf die Längsachse des Werkzeugaufnehmers ausgerichteten zweiten Ebene mindestens ein weiterer Sensor angeordnet ist.

Die Anordnung von drei Sensoren reicht aus, um die Position des Werkzeugaufnehmers relativ zum Werkzeughalter in Axialrichtung der Längsachse des Werkzeugaufnehmers oder des Werkzeughalters zu bestimmen und ein vierter Sensor ist notwendig, um auch den Kippwinkel des Werkzeugaufnehmers zum Werkzeughalter zu bestimmen.

Den Sensoren können unterschiedliche bekannte Messsysteme zugrunde liegen. Es können sowohl induktive, kapazitive oder optische Sensoren zur Abstandsmessung herangezogen werden.

Bei Werkzeugen, die für ihren zweckentsprechenden Einsatz eine bestimmte Winkellage im Werkzeugaufnehmer einnehmen müssen, ist es vorteilhaft, wenn hierfür eine angestrebte Zielposition bereits bei der Aufnahme des Werkzeughalters durch den Werkzeugaufnehmer festgelegt wird. Dies wird erreicht, indem dem Kegelschaft und der Kegelhülse korrespondierende Verriegelungselemente zugeordnet sind. Diese angestrebte Zielposition ist bestimmt, wenn dem Kegelschaft ein vorstehendes oder aus der Mantelfläche herausragendes Verriegelungselement, beispielsweise eine Passfeder, und der Kegelhülse des Werkzeugaufnehmers eine korrespondierende, eine Winkellage bestimmende Verriegelungsöffnung, beispielsweise eine Nut, zugeordnet ist.

Für spezielle Einsätze werden Werkzeuge benötigt, die zusätzlich zu ihrer Positionierung bzw. Anstellbewegung Funktionen ausführen müssen, die durch die Handhabungseinrichtung unmittelbar nicht durchgeführt werden können wie z.B. die Greifbewegungen einer Zange. Um dies zu ermöglichen, liegt in einer verriegelten Position des Werkzeughalters im Werkzeugaufnehmer eine Austrittsöffnung einer Medienversorgungsleitung an der Kegelmantelfläche der Kegelhülse einer Austrittsöffnung einer Medienversorgungsleitung an der Kegelmantelfläche des Kegelschaftes gegenüber.

Sofern mehrere korrespondierende Medienversorgungsleitungen für die Betätigung des Werkzeuges notwendig sind, sind diese korrespondierenden Medienversorgungsleitungen bei der Anordnung mehrerer Austrittsöffnungen an der Kegelhülse und am Kegelschaft durch Dichtelemente voneinander getrennt.

Zur Lösung der gestellten Aufgabe wird weiters ein Verfahren zum automatisierten Ankuppeln eines ein Werkzeug tragenden Werkzeughalters an einem Werkzeugaufnehmer auf einer Handhabungseinrichtung, wie vorzugsweise einem Roboter, welche dadurch gekennzeichnet ist, dass ein in einer Ablageposition in einem Werkzeughalter montiertes Werkzeug von der Steuereinheit der Handhabungseinrichtung ausgewählt und von Werkzeugaufnehmer angesteuert bzw. angefahren wird, dass während des Aufschiebens des Werkzeugaufnehmers auf den Werkzeughalter die Istposition des Werkzeugaufnehmers zum Werkzeughalter mit Sensoren kontinuierlich ermittelt und korrigiert wird und dass der Werkzeughalter in seiner erreichten Zielposition von einer Greif- und Spanneinrichtung des Werkzeugaufnehmers im Werkzeugaufnehmer fixiert wird.

Die Ermittlung der Istposition des Werkzeughalters relativ zum Werkzeugaufnehmer erfolgt mit mehreren am Werkzeugaufnehmer verteilten Sensoren, mit denen ein für den Abstand zu einer Referenzfläche am Werkzeughalter repräsentatives Messsignal aufgenommen wird, dass aus diesen Messsignalen die radiale Abweichung und der Kippwinkel des Werkzeugaufnehmers zum Werkzeughalter ermittelt wird und mindestens ein Steuersignal generiert wird mit dem die Ausrichtung des Werkzeugaufnehmers auf den Werkzeughalter durch Stellmittel der Handhabungseinrichtung erfolgt. An Stelle der radialen Abweichung und des Kippwinkels des Werkzeugaufnehmers zum Werkzeughalter können auch andere, die räumliche Zuordnung des Werkzeugaufnehmers zum Werkzeughalter eindeutig festlegende Kenngrößen ermittelt werden.

Eine unsymmetrische Anordnung der Sensoren ermöglicht, dass aus den von den Sensoren aufgenommenen Messsignalen zusätzlich die Winkellage des Werkzeughalters zum Werkzeugaufnehmer ermittelt und ein Steuersignal generiert wird, mit dem die räumliche Ausrichtung des Werkzeugaufnehmers durch die Stellmittel der Handhabungseinrichtung erfolgt.

### Kurzbeschreibung der Zeichnungen

Weitere Vorteile und Merkmale der vorliegenden Erfindung ergeben sich aus der nachfolgenden Beschreibung nicht einschränkender Ausführungsbeispiele, wobei auf die beiliegenden Figuren Bezug genommen wird, die folgendes zeigen:
- Fig. 1: einen Längsschnitt durch eine erfindungsgemäße Kuppeleinrichtung mit einem Werkzeugaufnehmer und mit einem Werkzeughalter,
- Fig. 2: ein Funktionsschema zum automatischen Ankuppeln mit der erfindungsgemäßen Kuppeleinrichtung,
- Fig. 3a: die geometrischen Zusammenhänge während des Kuppelvorganges in einer Längsschnitt-Darstellung durch den Werkzeughalter und den Werkzeugaufnehmer,
- Fig. 3b: die geometrischen Zusammenhänge während des Kuppelvorganges in einer Projektion in eine Bildebene normal zur Längsachse des Werkzeugaufnehmers,
- Fig.4: Darstellung der Medienversorgungsdurchführung durch Werkzeughalter und Werkzeugaufnehmer.

### Ausführung der Erfindung

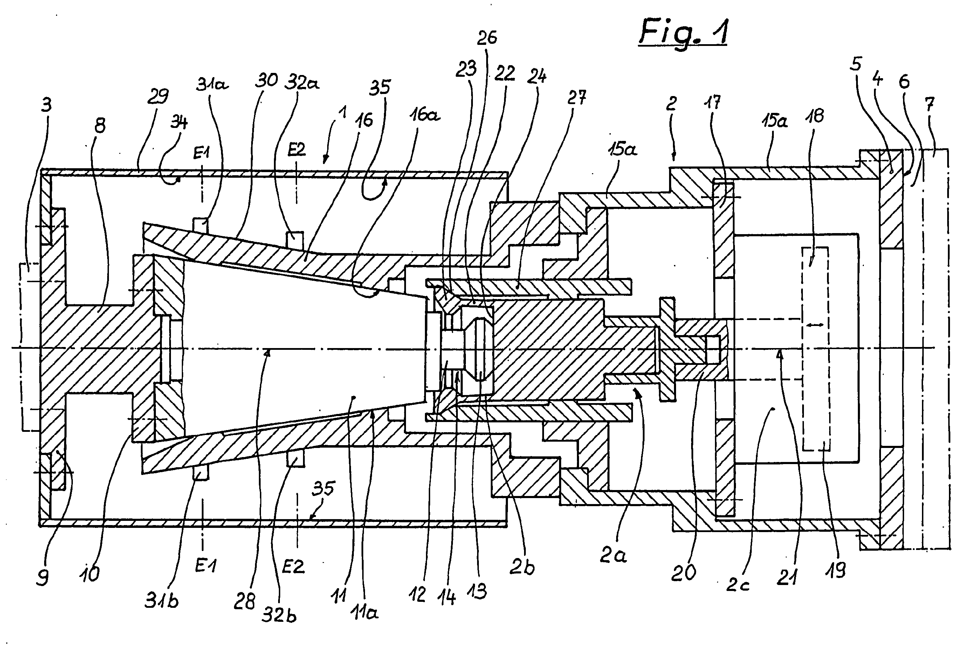

In Figur 1 ist eine Kuppeleinrichtung zum automatisierten Ankuppeln eines Werkzeughaltes 1 an einen Werkzeugaufnehmer 2 der erfindungsgemäßen Art in einem Längsschnitt durch die Kuppeleinrichtung dargestellt. Am Werkzeughalter 1 ist ein nicht näher dargestelltes, durch strichpunktierte Linien angedeutetes Werkzeug 3 stirnseitig befestigt. Der Werkzeugaufnehmer 2 ist mit der stirnseitigen Anschlussfläche 4 eines Anschlussflansches 5 an einen mit strichpunktierten Linien angedeuteten Anschlussflansch 6 eines Auslegers 7 einer nicht näher dargestellten Handhabungseinrichtung, z. B. einem Mehrachsenroboter, angeschlossen.

Der Werkzeughalter 1 umfasst einen Spannkopf 8 mit einem Flansch 9, an dem ein Werkzeug 3 zur Durchführung von Arbeiten befestigt ist, und einen Flansch 10, der mit einem Kegelschaft 11 fest verbunden ist. Dieser Kegelschaft 11 findet sich mit gleichen Dimensionen an allen Werkzeugen, die auf der Handhabungseinrichtung eingesetzt werden. Damit ist ein einfaches und schnelles Auswechseln von Werkzeugen möglich. Stirnseitig ist dem Kegelschaft 11 ein Zugbolzen 12 mit einem pilzförmigen Kopf 13 und einer Ringnut 14 zugeordnet.

Der Werkzeugaufnehmer 2 umfasst ein Gehäuse 15a und eine an diesem Gehäuse stirnseitig angeflanschte, sich nach außen erweiternde Kegelhülse 16, deren innere Kegelmantelfläche 16a dieselbe Steigung aufweist, wie die äußere Kegelmantelfläche 11a des Kegelschaftes 11. Die Kernkomponente des Werkzeugaufnehmers 2 ist ein Verriegelungsmechanismus 2a, der eine Greifeinrichtung 2b und eine Spanneinrichtung 2c umfasst. An einem Stützflansch 17 ist die von einer Druckmittelzylindereinheit 18 gebildete Spanneinrichtung 2c befestigt, die einen Kolben 19 und eine mehrteilige Kolbenstange 20 umfasst, die entlang der Längsachse 21 des Werkzeugaufnehmers verschiebbar ist. An der Kolbenstange 20 sind mehrere als Federn ausgebildete Spannzungen 22 mit ihrem einen Ende befestigt und mit ihrem anderen Ende in radialer Richtung beweglich. Die Spannzungen 22 weisen an ihren beweglichen Enden Verriegelungsnasen 23 auf, die beim Einfädeln des Werkzeughalters 1 in die Kegelhülse 16 ein axiales Vorbeibewegen des pilzförmigen Kopfes 13 bis zur Anschlagfläche 24 der Kolbenstange 20 zulassen. Bei der axialen Verriegelungsbewegung des Kolbens 19 werden die Spannzungen 22 an der Kegelfläche 26 der Zentrierhülse 27 nach innen gedrückt, greifen in die Ringnut 14 des Zugbolzens 12 ein und klemmen den Kegelschaft 11 in der Kegelhülse 16 zentrisch, so dass die Längsachse 21 des Werkzeugaufnehmers 2 mit der Längsachse 28 des Werkzeughalters fluchtet.

Der Werkzeughalter 1 ist entlang seiner Längserstreckung von einer rohrförmigen Schutzhaube 29 umgeben, die mit ihrem einen Ende am Flansch 9 befestigt und in Richtung zum Werkzeugaufnehmer 2 offen ist. Die Schutzhaube 29 bildet eine zylindrische Schutzhülle für den Kegelschaft 11 und den Zugbolzen 13, sowie in der gekoppelten Position auch für die Kegelhülse 16 des Werkzeugaufnehmers 2, um diese Teile vor thermischen Einflüssen und Verschmutzung im Arbeitsbereich der Handhabungseinrichtung zu schützen.

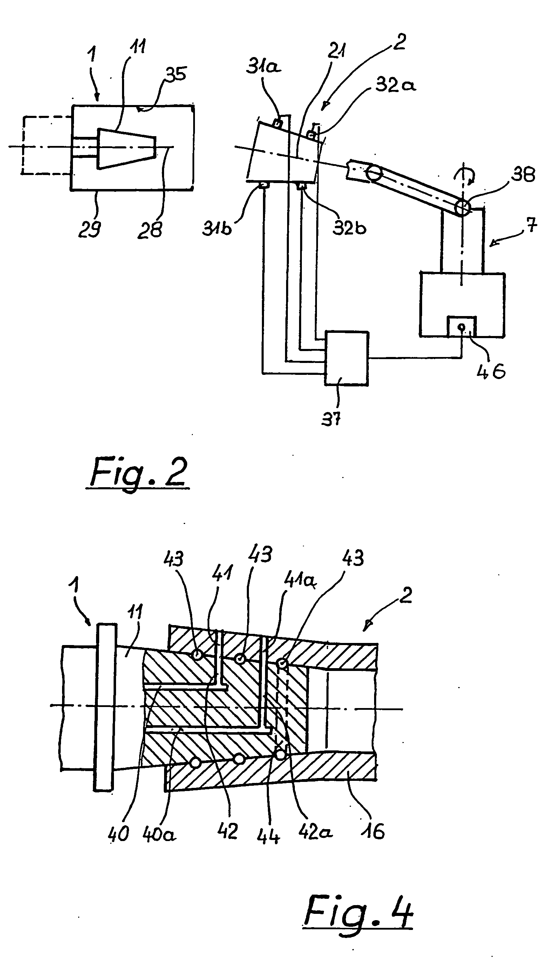

In die Außenwand 30 der Kegelhülse 16 des Werkzeugaufnehmers 2 sind in zwei Normalebenen E1 und E2 mehrere Sensoren 31a, 31b, 32a, 32b am Umfang verteilt angeordnet, mit denen ein für den Abstand zu einer Referenzfläche 35 des Werkzeughalters 1 repräsentatives Messsignal ermittelt werden kann. Die Referenzfläche 35 ist hierbei von der Innenmantelfläche 34 der rohrförmigen Schutzhaube 29 gebildet, wie in Figur 2 schematisch veranschaulicht werden die Messsignale kontinuierlich oder in Zeitabständen einer Auswerteeinheit 37 zugeführt, in der jedem Sensor ein dem Messsignal entsprechender minimaler Abstandswert zur Referenzfläche 35 zugeordnet wird und im Weiteren unter Berücksichtigung der Raumpositionen der Sensoren die relative Position des Werkzeugaufnehmers 2 zur Position des Werkzeughalters 1, somit der Parallelversatz und die räumliche Schräglage der Längsachse 21 des Werkzeugaufnehmers 2 zur Längsachse 28 des Werkzeughalter 1 ermittelt. Aus diesen ermittelten Istwerten werden Stellsignale generiert, die den Stellmitteln 38 der Handhabungseinrichtung 7 zugeführt werden, d.h. mit der Handhabungseinrichtung wird die Kegelhülse 16 des Werkzeugaufnehmer 2 sensorgesteuert auf den Kegelschaft 11 des beispielsweise in einem Magazin bereitgestellten Werkzeughalters 1 achsfluchtend ausgerichtet und aufgeschoben. Der Handhabungseinrichtung 7 ist eine Steuereinheit 46 zugeordnet, die die Auswahl eines in einem Werkzeughalter montierten Werkzeuges aus einer nicht dargestellten Ablageposition eines Werkzeugmagazins und den Bewegungsablauf des Werkzeugaufnehmers 2 steuert.

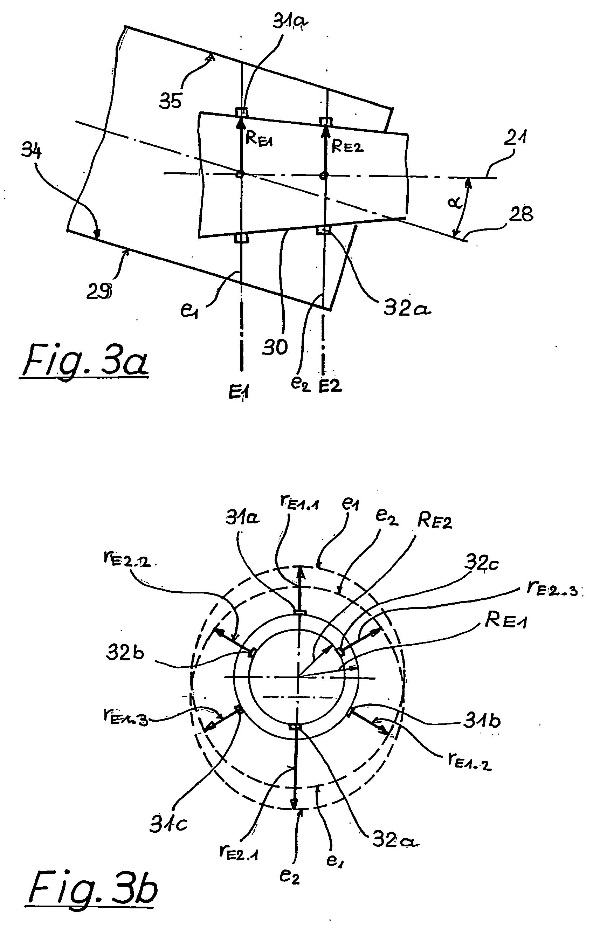

Die Figuren 3a und 3b zeigen eine Momentansituation während des automatisierten Ankuppelvorganges in einem Längsschnitt in Figur 3a und projiziert auf eine Bildebene in Figur 3b in Blicksichtung der Längsachse 21 des Werkzeugaufnehmers 2. Die Kegelhülse ist durch zwei achsnormale Normalebenen E₁ und E₂ geschnitten, die in Figur 3b durch die Schnittlinien mit der äußeren Kegelmantelfläche 30 abgebildet sind und Kreise (durchgehende Linien) mit den Radien R_{E1}, und R_{E2} bilden, die auf einer normal zur Bildebene stehenden Längsachse 21 des Werkzeugaufnehmers liegen und in die Bildebene projiziert sind. Auf diesen Radien sind die Sensoren 31 a, 31 b, 31 c, 32a, 32b, 32c am Umfang verteilt angeordnet. In einer Momentanposition während des Aufschiebens der Kegelhülse auf den Kegelschaft ergeben sich durch die beiden Normalebenen E₁ und E₂ Schnittlinien e₁, e₂ mit der Innenmantelfläche 34 der Schutzhaube 29, die Ellipsen bilden (strichlierte Linien). Der radiale Abstand r_{E1.1}, r_{E1.2}, r_{E1.3}, r_{E2.1}, r_{E2.2}, r_{E2.3} von den jeweiligen Sensoren 31 a, 31 b, 31 c, 32a, 32b, 32c zu der jeweiligen Schnittlinie e₁, e₂ der Innenmantelfläche 34 der Schutzhaube entspricht dem von den Sensoren detektierten Abstand zur Referenzfläche 35. In die Bildebene projizierte Schnittpunkte der Bildebenen E₁ und E₂ mit der Längsachse der Werkzeugaufnahme stellen zwei Punkte der Längsachse des Werkzeughalters dar und zeigen den axialen Versatz der beiden Längsachsen. Aus dem Längsschnitt der Figur 3a ist der Kippwinkel α der beiden Längsachsen 21, 28 zueinander ersichtlich. Mit einer genügend großen Anzahl von Sensoren ist eine vollständige Ermittlung aller notwendigen Kenngrößen für eine Positionsregelung durch die Handhabungseinrichtung in einem mathematischen Modell möglich, welches die geometrischen Zusammenhänge der räumlichen Lage des Werkzeughalters und des Werkzeugaufnehmers zueinander beschreibt.

Für den speziellen Fall, dass dem Werkzeughalter ein Werkzeug zugeordnet ist, welches beispielsweise Greif-, Klemm- und Haltebewegungen durchführen muss, wie dies bei einer Zange der Fall ist, ist eine Medienversorgungsleitung 40 (Pressluft, Signalleitungen) durch einen Kontaktbereich des Werkzeughalters und des Werkzeugaufnehmers geführt. Eine dafür geeignete Anordnung ist in Figur 4 dargestellt. In der verriegelten Position des Werkzeughalters 1 im Werkzeugaufnehmer 2 liegt eine Austrittsöffnung 41 der Medienversorgungsleitung 40 in der Kegelmantelfläche 16a der Kegelhülse 16 einer Austrittsöffnung 42 der Medienversorgungsleitung 40 in der Kegelmantelfläche 11 a des Kegelschaftes 11 gegenüber.

Mehrere nebeneinander positionierte, korrespondierende Austrittsöffnungen 41, 42, 41 a, 42a an der Kegelhülse 16 und dem Kegelschaft 11 sind durch Dichtelemente 43 voneinander getrennt. Die Dichtelemente 43 werden von O-Ringen gebildet, die in Ringnuten 44 des Kegelschaftes 11 eingelegt sind. Es ist alternativ auch möglich, dass die O-Ringe in Ringnuten an der Kegelhülse eingelegt sind.

### Bezugszeichenliste:

- 1: Werkzeughalter
- 2: Werkzeugaufnehmer
- 2a: Verriegelungsmechanismus
- 2b: Greifeinrichtung
- 2c: Spanneinrichtung
- 3: Werkzeug
- 4, 5, 6: Anschlussflansch
- 7: Ausleger einer Handhabungseinrichtung
- 8: Spannkopf
- 9, 10: Flansch
- 11: Kegelschaft
- 11 a: Kegelmantelfläche des Kegelschaftes 11
- 12: Zugbolzen
- 13: pilzförmiger Kopf des Zugbolzens 12
- 14: Ringnut
- 15a: Gehäuse
- 16: Kegelhülse
- 16a: innere Kegelmantelfläche der Kegelhülse 16
- 17: Stützflansch
- 18: Druckmittelzylindereinheit
- 19: Kolben
- 20: mehrteilige Kolbenstange
- 21: Längsachse des Werkzeugaufnehmers 2
- 22: Spannzunge
- 23: Verriegelungsnase der Spannzunge 22
- 24: Anschlagfläche an der Kolbenstange 20
- 26: Kegelfläche
- 27: Zentrierhülse
- 28: Längsachse des Werkzeughalters 1
- 29: Schutzhaube
- 30: Außenwand der Kegelhülse
- 31a, 31b, 31c: Sensoren
- 32a, 32b, 32c: Sensoren
- 34: Innenmantelfläche der Schutzhaube 29
- 35: Referenzfläche
- 37: Auswerteeinheit
- 38: Stellmittel der Handhabungseinrichtung
- 40: Medienversorgungsleitung
- 41, 41a, 42, 42a: Austrittsöffnung der Medienversorgungsleitung 40
- 43: Dichtelement
- 44: Ringnut für Dichtelement 43
- 46: Steuereinheit

- α: Kippwinkel

- E₁, E₂: Normalebenen
- R_{E1} R_{E2}: Radien in der Normalebene
- e₁, e₂: Schnittlinien
- r_{E1.1}, r_{E1.2}, r_{E1.3}, *r*_{E2.1}, r_{E2.2}, r_{E2.3}: radialer Abstand Sensor - Schnittlinie

## Patentansprüche

1. Kuppeleinrichtung umfassend einen Werkzeughalter (1) und einen Werkzeugaufnehmer (2) zum automatisierten Ankuppeln des ein Werkzeug tragenden Werkzeughalters (1), der einen Kegelschaft (11) und einen Spannkopf (8) umfasst, an den Werkzeugaufnehmer (2) auf einer Handhabungseinrichtung (7), wie einem Roboter, mit einer Kegelhülse (16) und einem Verriegelungsmechanismus (2a), der eine mit dem Spannkopf (8) zusammenwirkende Greifeinrichtung (2b) und eine in axialer Richtung wirkende Spanneinrichtung (2c) umfasst, sowie einen Sensor zur Lagebestimmung aufweist, wobei an der Kegelhülse (16) des Werkzeugaufnehmers (2) eine Anzahl von Sensoren (31 a, 31 b, 31 c, 32a, 32b, 32c) angeordnet sind und jedem Sensor eine Referenzfläche (35) am Werkzeughalter (1) zu dessen Lagebestimmung gegenüberliegt, **dadurch gekennzeichnet, dass** der Kegelschaft (11) des Werkzeughalters (1) von einer den Kegelschaft (11) entlang seiner Längserstreckung mit radialem Abstand umhüllenden Schutzhaube (29) umgeben ist.

2. Kuppeleinrichtung nach Anspruch 1, **dadurch gekennzeichnet, dass** die Referenzfläche (35) am Werkzeughalter (1) von der äußeren Kegelmantelfläche (11a) des Kegelschaftes (11) gebildet ist.

3. Kuppeleinrichtung nach Anspruch 1 oder 2, **dadurch gekennzeichnet, dass** die Referenzfläche (35) am Werkzeughalter (1) von der Innenmantelfläche (34) einer den Kegelschaft (11) mit radialem Abstand umhüllenden Schutzhaube (29) gebildet ist.

4. Kuppeleinrichtung nach einem der vorhergehenden Ansprüche, **dadurch gekennzeichnet, dass** an der inneren Kegelmantelfläche (16a) oder an der Außenwand (30) der Kegelhülse (16) mehrere Sensoren (31 a, 31 b, 31 c, 32a, 32b, 32c) zur Bestimmung der räumlichen Lage des Werkzeughalters (1) relativ zur räumlichen Lage des Werkzeugaufnehmers (2) angeordnet sind, dass den Sensoren (31 a, 31 b, 31 c, 32a, 32b, 32c) einer Auswerteeinheit (37) für die ermittelten Messdaten zugeordnet ist und die Auswerteeinheit (37) mit Stellmittel (38) der Handhabungseinrichtung (7) signaltechnisch verbunden ist.

5. Kuppeleinrichtung nach Anspruch 4, **dadurch gekennzeichnet, dass** an der inneren Kegelmantelfläche (16a) oder an der Außenwand (30) der Kegelhülse (16) mindestens zwei, vorzugsweise drei, Sensoren (31a, 31b, 31c) in einer normal auf die Längsachse (21) des Werkzeugaufnehmers (2) ausgerichteten ersten Ebene (E1) angeordnet sind und in einer weiteren mit axialem Abstand zur ersten Ebene (E1) und normal auf die Längsachse (21) des Werkzeugaufnehmers (2) ausgerichteten zweiten Ebene (E2) mindestens ein weiterer Sensor (32a, 32b, 32c) angeordnet ist.

6. Kuppeleinrichtung nach einem der vorhergehenden Ansprüche, **dadurch gekennzeichnet, dass** die Sensoren (31a, 31b, 31c, 32a, 32b, 32c) von induktiven, kapazitiven oder optischen Sensoren gebildet sind.

7. Kuppeleinrichtung nach einem der vorhergehenden Ansprüche, **dadurch gekennzeichnet, dass** dem Kegelschaft (11) und der Kegelhülse (16) korrespondierende Verriegelungselemente zugeordnet sind.

8. Kuppeleinrichtung nach Anspruch 7, **dadurch gekennzeichnet, dass** dem Kegelschaft (11) eine Passfeder und der Kegelhülse (16) eine korrespondierende Nut zur Festlegung der Winkellage des Werkzeughalters im Werkzeugaufnehmer zugeordnet ist.

9. Kuppeleinrichtung nach einem der vorhergehenden Ansprüche, **dadurch gekennzeichnet, dass** in einer verriegelten Position des Werkzeughalters (1) im Werkzeugaufnehmer (2) eine Austrittsöffnung (41) einer Medienversorgungsleitung (40) an der Kegelmantelfläche (16a) der Kegelhülse (16) einer Austrittsöffnung (42) einer Medienversorgungsleitung (40) an der Kegelmantelfläche (11a) des Kegelschaftes (11) gegenüberliegt.

10. Kuppeleinrichtung nach Anspruch 9, **dadurch gekennzeichnet, dass** korrespondierenden Medienversorgungsleitungen (40, 40a) bei der Anordnung mehrerer Austrittsöffnungen (41, 42, 41 a, 42a) an der Kegelhülse (16) und am Kegelschaft (11) durch Dichtelemente (43) voneinander getrennt sind.

## Claims

1. Coupling device comprising a tool holder (1) and a tool receiver (2) for automatically coupling the tool holder (1), which carries a tool and comprises a taper shank (11) and a clamping head (8), to the tool receiver (2) on a manipulation device (7), such as a robot, having a taper sleeve (16) and a locking mechanism (2a) that comprises a gripping device (2b), which cooperates with the clamping head (8), and a clamping device (2c), which acts in an axial direction, and has a sensor for the purpose of determining position, a number of sensors (31a, 31b, 31c, 32a, 32b, 32c) being arranged on the taper sleeve (16) of the tool receiver (2), and a reference surface (35) on the tool holder (1) faces each sensor in order to determine the position of the tool holder, **characterized in that** the taper shank (11) of the tool holder (1) is surrounded by a protective cover (29) that, at a radial distance, envelops the taper shank (11) along its longitudinal extent.

2. Coupling device according to Claim 1, **characterized in that** the reference surface (35) on the tool holder (1) is constituted by the outer conical peripheral surface (11a) of the taper shank (11).

3. Coupling device according to Claim 1 or 2, **characterized in that** the reference surface (35) on the tool holder (1) is constituted by the inner peripheral surface (34) of a protective cover (29) that envelops the taper shank (11) at a radial distance.

4. Coupling device according to any one of the preceding claims, **characterized in that** a plurality of sensors (31a, 31b, 31c, 32a, 32b, 32c) are arranged on the inner conical peripheral surface (16a) or on the outer wall (30) of the taper sleeve (16) for the purpose of determining the spatial position of the tool holder (1) relative to the spatial position of the tool receiver (2), an evaluation device (37) for the ascertained measurement data is assigned to the sensors (31a, 31b, 31c, 32a, 32b, 32c), and the evaluation device (37) is connected by means of signals to actuating means (38) of the manipulation device (7).

5. Coupling device according to Claim 4, **characterized in that** at least two, preferably three, sensors (31a, 31b, 31c) are arranged, in a first plane (E1) aligned perpendicularly to the longitudinal axis (21) of the tool receiver (2), on the inner conical peripheral surface (16a) or on the outer wall (30) of the taper sleeve (16), and at least one further sensor (32a, 32b, 32c) is arranged in a further, second plane (E2) aligned at an axial distance relative to the first plane (E1) and perpendicularly to the longitudinal axis (21) of the tool receiver (2).

6. Coupling device according to any one of the preceding claims, **characterized in that** the sensors (31a, 31b, 31c, 32a, 32b, 32c) are constituted by inductive, capacitive or optical sensors.

7. Coupling device according to any one of the preceding claims, **characterized in that** corresponding locking elements are assigned to the taper shank (11) and the taper sleeve (16).

8. Coupling device according to Claim 7, **characterized in that** a feather key is assigned to the taper shank (11), and a corresponding groove, for defining the angular position of the tool holder in the tool receiver, is assigned to the taper sleeve (16).

9. Coupling device according to any one of the preceding claims, **characterized in that**, when the tool holder (1) is in a locked position in the tool receiver (2), an outlet opening (41) of a media supply line (40) on the conical peripheral surface (16a) of the taper sleeve (16) faces an outlet opening (42) of a media supply line (40) on the conical peripheral surface (11a) of the taper shank (11).

10. Coupling device according to Claim 9, **characterized in that** corresponding media supply lines (40, 40a) are separated from one another by sealing elements (43) in the case of a plurality of outlet openings (41, 42, 41a, 42a) being arranged on the taper sleeve (16) and on the taper shank (11).

## Revendications

1. Dispositif de couplage comprenant un porte-outil (1) et un support de fixation d'outil (2) pour le couplage automatisé du porte-outil (1) supportant un outil, qui comprend une tige conique (11) et une tête de serrage (8) ainsi que, au niveau du support de fixation d'outil (2), sur un dispositif de manutention (7), tel un robot, équipé d'un fourreau conique (16) et d'un mécanisme de verrouillage (2a), un dispositif de préhension (2b) entrant en interaction avec la tête de serrage (8) et un dispositif de serrage (2c) agissant dans la direction axiale, et comporte un capteur pour la détermination de la position, un certain nombre de capteurs (31a, 31b, 31c, 32a, 32b, 32c) étant disposés au niveau du fourreau conique (16) du support de fixation d'outil (2) et chaque capteur étant placé en face d'une surface de référence (35) au niveau du porte-outil (1) en vue de déterminer sa position, **caractérisé en ce que** la tige conique (11) du porte-outil (1) est entourée par un capot de protection (29) entourant la tige conique (11) à une certaine distance radiale le long de son extension longitudinale.

2. Dispositif de couplage selon la revendication 1, **caractérisé en ce que** la surface de référence (35) est formée au niveau du porte-outil (1) par la surface d'enveloppe conique (11a) extérieure de la tige conique (11).

3. Dispositif de couplage selon la revendication 1 ou 2, **caractérisé en ce que** la surface de référence (35) est formée au niveau du porte-outil (1) par la surface d'enveloppe intérieure (34) d'un capot de protection (29) entourant à une certaine distance radiale la tige conique (11).

4. Dispositif de couplage selon l'une quelconque des revendications précédentes, **caractérisé en ce que** plusieurs capteurs (31a, 31b, 31c, 32a, 32b, 32c) sont disposés au niveau de la surface d'enveloppe conique (16a) intérieure ou de la paroi extérieure (30) du fourreau conique (16) pour déterminer la position dans l'espace du porte-outil (1) par rapport à la position dans l'espace du support de fixation d'outil (2), qu'une unité d'analyse (37) est associée aux capteurs (31a, 31b, 31c, 32a, 32b, 32c) pour les données mesurées transmises et que l'unité d'analyse (37) est reliée à des moyens de réglage (38) du dispositif de manutention (7) par le biais de la technique des signaux.

5. Dispositif de couplage selon la revendication 4, **caractérisé en ce qu'**au moins deux, de préférence trois, capteurs (31a, 31b, 31c) sont disposés au niveau de la surface d'enveloppe conique (16a) intérieure ou au niveau de la paroi extérieure (30) du fourreau conique (16) dans un premier plan (E1) aligné perpendiculairement sur l'axe longitudinal (21) du support de fixation d'outil (2) et qu'au moins un capteur (32a, 32b, 32c) supplémentaire est disposé dans un deuxième plan (E2) supplémentaire situé à une certaine distance axiale du premier plan (E1) et aligné perpendiculairement sur l'axe longitudinal (21) du support de fixation d'outil (2).

6. Dispositif de couplage selon l'une quelconque des revendications précédentes, **caractérisé en ce que** les capteurs (31a, 31b, 31c, 32a, 32b, 32c) sont constitués de capteurs inductifs, capacitifs ou optiques.

7. Dispositif de couplage selon l'une quelconque des revendications précédentes, **caractérisé en ce que** des éléments de verrouillage correspondants sont associés à la tige conique (11) et au fourreau conique (16).

8. Dispositif de couplage selon la revendication 7, **caractérisé en ce qu'**une clavette est associée à la tige conique (11) et qu'une encoche correspondante est associée au fourreau conique (16) pour déterminer la position angulaire du porte-outil dans le support de fixation d'outil.

9. Dispositif de couplage selon l'une quelconque des revendications précédentes, **caractérisé en ce que** dans une position verrouillée du porte-outil (1) dans le support de fixation d'outil (2), une ouverture de sortie (41) d'une conduite d'alimentation en agent (40) placée au niveau de la surface d'enveloppe conique (16a) du fourreau conique (16) est opposée à une ouverture de sortie (42) d'une conduite d'alimentation en agent (40) placée au niveau de la surface d'enveloppe conique (11a) de la tige conique (11).

10. Dispositif de couplage selon la revendication 9, **caractérisé en ce que** les conduites d'alimentation en agent (40, 40a) correspondantes sont séparées l'une de l'autre par les éléments d'étanchéité (43) en cas d'agencement de plusieurs ouvertures de sortie (41, 42, 41a, 42a) au niveau du fourreau conique (16) et au niveau de la tige conique (11).
